# EUROPÄISCHE PATENTSCHRIFT

(11) **EP 0 772 397 B1**
(45) Veröffentlichungstag und Bekanntmachung des Hinweises auf die Patenterteilung: **28.12.2005**
(21) Anmeldenummer: 95926913.5
(22) Anmeldetag: 17.07.1995
(51) Int. Cl.: A01N 51/00, A01N 47/40

(54) **Insektizid und Fungizid enthaltende Mittel zur Bekämpfung von Pflanzenschädlingen**
Compositions for controlling plant pests comprising insecticide and fungicide
Compositions pour lutter contre les parasites des plantes comprenant un insecticide et un fongicide

(30) Priorität: 28.07.1994 DE 4426753
(43) Veröffentlichungstag der Anmeldung: 14.05.1997
(60) Teilanmeldung: 05021241.4
(73) Patentinhaber: Bayer CropScience AG, 40789 Monheim (DE)
(72) Erfinder: DUTZMANN, Stefan, D-40721 Hilden (DE); ERDELEN, Christoph, D-42799 Leichlingen (DE); ANDERSCH, Wolfram, D-51469 Bergisch Gladbach (DE); DEHNE, Heinz-Wilhelm, D-53125 Bonn (DE); HARTWIG, Jürgen, D-42799 Leichlingen (DE); STENZEL, Klaus, D-40595 Düsseldorf (DE); KRÄMER, Wolfgang, D-51399 Burscheid (DE)
(86) Internationale Anmeldenummer: PCT/EP1995/002799
(87) Internationale Veröffentlichungsnummer: WO 1996/003045

(56) Entgegenhaltungen:
- EP-A- 0 511 541
- WO-A-92/21241
- CHEMICAL PATENTS INDEX, BASIC ABSTRACTS JOURNAL Week 8831, Derwent Publications Ltd., London, GB; AN 88-215479 & JP,A,63 150 204 (NIHON TOKUSHU NOYAKU SEIZO) 22. Juni 1988
- CHEMICAL PATENTS INDEX, BASIC ABSTRACTS JOURNAL Week 8831, Derwent Publications Ltd., London, GB; AN 88-215480 & JP,A,63 150 205 (NIHON TOKUSHU NOYAKU SEIZO) 22. Juni 1988
- CHEMICAL PATENTS INDEX, BASIC ABSTRACTS JOURNAL Week 8831, Derwent Publications Ltd., London, GB; AN 88-217497 & JP,A,63 154 602 (NIHON TOKUSHU NOYAKU SEIZO) 27. Juni 1988
- CHEMICAL PATENTS INDEX, BASIC ABSTRACTS JOURNAL Week 8832, Derwent Publications Ltd., London, GB; AN 88-222993 & JP,A,63 156 705 (NIHON TOKUSHU NOYAKU SEIZO) 29. Juni 1988
- CHEMICAL PATENTS INDEX, DOCUMENTATION ABSTRACTS JOURNAL Week 8907, Derwent Publications Ltd., London, GB; AN 89-050297 & JP,A,01 006 203 (NIHON TOKUSHU NOYAKU SEIZO) 10. Januar 1989
- CHEMICAL PATENTS INDEX, DOCUMENTATION ABSTRACTS JOURNAL Week 9115, Derwent Publications Ltd., London, GB; AN 91-105686 & JP,A,03 047 106 (NIHON TOKUSHU NOYAKU SEIZO) 28. Februar 1991
- CHEMICAL PATENTS INDEX, DOCUMENTATION ABSTRACTS JOURNAL Week 9309, Derwent Publications Ltd., London, GB; AN 93-070992 & JP,A,05 017 311 (NIHON TOKUSHU NOYAKU SEIZO) 26. Januar 1993

## Beschreibung

Die vorliegende Erfindung betrifft Schädlingsbekämpfungsmittel die eine Wirkstoffkombination bestimmter Agonisten oder Antagonisten der nicotinergen Acetylcholinrezeptoren von Insekten mit einem Fungizid enthalten, ihre Herstellung und ihre Verwendung zur Bekämpfung von Pflanzenschädlingen.

Agonisten oder Antagonisten der nicotinergen Acetylcholinrezeptoren von Insekten sind bekannt, z.B. aus den folgenden Publikationen:

Europäische Offenlegungsschriften Nr. 464830, 428941, 425 978, 386 565, 383 091, 375 907, 364 844, 315 826, 259 738, 254 859, 235 725, 212 600, 192 060, 163 855, 154 178, 136 636, 303 570, 302 833, 306 696, 189 972, 455 000, 135 956, 471 372, 302 389; Deutsche Offenlegungsschriften Nr. 3 639 877, 3 712 307; Japanische Offenlegungsschriften Nr. 03 220 176, 02 207 083, 63 307 857, 63 287 764, 03 246 283, 04 9371, 03 279 359, 03 255 072; US-Patentschriften Nr. 5 034 524, 4 948 798, 4 918 086, 5 039 686, 5 034 404; PCT-Anmeldungen Nr. WO 91/17 659, 91/4965; Französische Anmeldung Nr. 2 611 114; Brasilianische Anmeldung Nr. 88 03 621.

Auf die in diesen Publikationen beschriebenen Methoden, Verfahren, Formeln und Definitionen sowie auf die darin beschriebenen einzelnen Präparationen und Verbindungen wird hiermit ausdrücklich Bezug genommen.

Fungizide Wirkstoffe, wie Azol-Derivate, Arylbenzylether, Benzamide, Morpholin-Verbindungen und andere Heterocyclen sind bekannt (vgl. K.H. Büchel "Pflanzenschutz und Schädlingsbekämpfung", Seiten 140 bis 153, Georg Thieme-Verlag, Stuttgart 1977, EP-OS 0 040 345, DE-OS 2 324 010, DE-OS 2 201 063, EP-OS 0 112 284, EP-OS O 304 758 und DD-PS 140 412).

Mischungen bestimmter Nitromethylenderivate mit fungiziden Wirkstoffen und ihre Verwendung als Schädlingsbekämpfungsmittel im Pflanzenschutz sind bereits bekannt (US-P-4 731 385; JP-OS 63-68507, 63/68505; 63/72 608; 63/72 609, 63/72 610). Mischungen bestimmter offenkettiger Nitromethylene und Nitroguanidine mit Fungiziden sind bereits bekannt (JP-OS 30 47 106).

Mischungen von Cyclopropylcarboxamiden mit bestimmten Nitromethylenen- oder Nitroguanidinderivaten sind bereits bekannt (JP-OS 3 271 207).

Mischungen von u.a. Imidacloprid und fungiziden Wirkstoffen zur Anwendung im Materialschutz und gegen Termiten, nicht aber zur Anwendung gegen pflanzenschädigende Schädlinge sind bereits bekannt (EP 511 541). Mischungen von Imidacloprid und Azolylmethylcycloalkanen insbesondere Triticonazol sind bekannt aus EP-OS 545 834.

Synergistische Mischungen von Nitroimino-, Nitromethylen- und Cyanimino Insektiziden mit bestimmten Azolfungiziden sind aus JP 05 017 311 und WO 92/21241 bekannt.

Die vorliegende Erfindung betrifft Mittel gegen Pflanzenschädlinge, die Verbindungen der allgemeinen Formel (I) 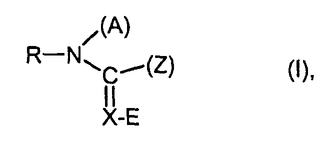 in welcher
- X: für =CH- oder =N- steht,
- E: für NO₂ oder CN steht,
- R: für Heteroarylmethyl steht mit bis zu 6 Ringatomen und N, O, S als Heteroatome, welche gegebenenfalls substituiert sind durch Alkyl mit 1 bis 4 Kohlenstoffatomen, Alkoxy mit 1 bis 4 Kohlenstoffatomen, Alkylthio mit 1 bis 4 Kohlenstoffatomen, Halogenalkyl mit 1 bis 4 Kohlenstoffatomen und 1 bis 5 Halogenatomen, wobei die Halogenatome gleich oder verschieden sind, Hydroxy; Halogen; Cyano; Nitro; Amino; Monoalkyl- und Dialkylamino mit 1 bis 4 Kohlenstoffatomen je Alkylgruppe,
- A: für Wasserstoff oder C₁₋₄-Alkyl steht,
- Z: für C₁₋₄-Alkyl oder -NH(C₁₋₄-Alkyl) steht oder
- A und Z: gemeinsam mit den Atomen, an welche sie gebunden sind, einen gesättigten oder ungesättigten, 5- bis 7-gliedrigen heterocyclischen Ring bilden, der weitere 1 oder 2 gleiche oder verschiedene Heteroatome und/oder Heterogruppen enthalten kann, wobei als Heteroatome Sauerstoff oder Stickstoff und als Heterogruppen N-Alkyl in Frage kommen, wobei Alkyl der N-Alkyl-Gruppe 1 bis 4 Kohlenstoffatome enthält,
in Mischung mit dem
Azol-Derivat der Formel 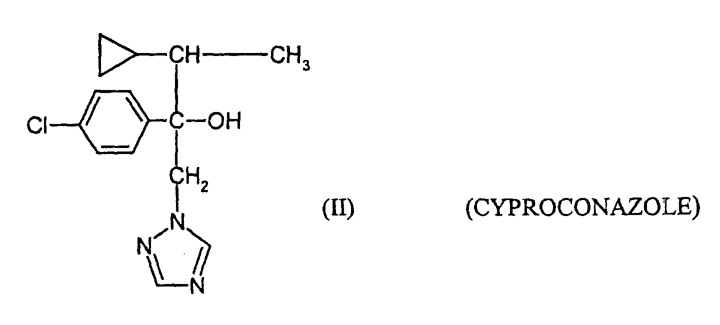 in einem synergistisch wirksamen Mengenverhältnis
enthalten.

Im einzelnen seien folgende Verbindungen genannt:

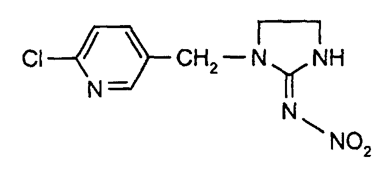

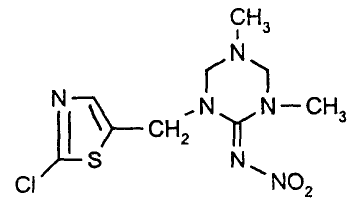

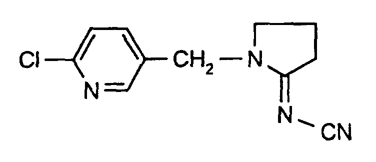

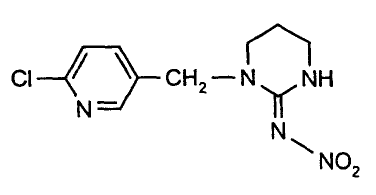

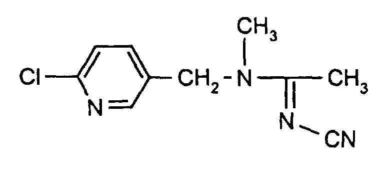

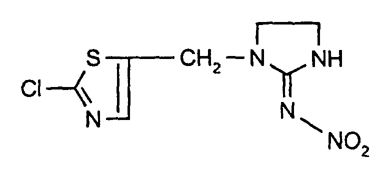

Der fungizide Wirkstoff der Formel (II) ist aus DE 34 06 993 bekannt.

Die erfindungsgemäßen Wirkstoffkombinationen können auch weitere Wirkstoffe sowie übliche Hilfs- und Zusatzstoffe sowie Verdünnungsmittel enthalten.

Wenn die Wirkstoffe in den erfindungsgemäßen Wirkstoffkombinationen in bestimmten Gewichtsverhälmissen vorhanden sind, zeigt sich ein deutlicher synergistischer Effekt der Mischungen. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)
0,1 bis 10 Gewichtsteile, vorzugsweise
0,3 bis 3 Gewichtsteile an fungizidem Wirkstoff der Formel (II).

Die erfindungsgemäßen Wirkstoffkombinationen besitzen sehr gute fungizide Eigenschaften. Sie lassen sich vor allem zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Cochliobolus, Septoria, Pyrenophora und Leptosphaeria, und gegen Pilzbefall an Gemüse, Wein und Obst, beispielsweise gegen Venturia oder Podosphaera an Äpfeln, Uncinula an Reben oder Sphaeroteca an Gurken.

Die Wirkstoffkombinationen eignen sich auch zur Bekämpfung von tierischen Schädlingen, vorzugsweise Arthropoden, insbesondere Insekten, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus annatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Phylloxera vastatrix, Pemphigus spp., Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, kömige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

## Patentansprüche

1. Mittel gegen Pflanzenschädlinge, die Verbindungen der allgemeinen Formel (I) 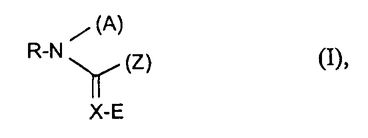 in welcher
X für =CH- oder =N- steht,
E für NO₂ oder CN steht,
R für Heteroarylmethyl steht mit bis zu 6 Ringatomen und N, O, S als Heteroatome, welche gegebenenfalls substituiert sind durch Alkyl mit 1 bis 4 Kohlenstoffatomen, Alkoxy mit 1 bis 4 Kohlenstoffatomen, Alkylthio mit 1 bis 4 Kohlenstoffatomen, Halogenalkyl mit 1 bis 4 Kohlenstoffatomen und 1 bis 5 Halogenatomen, wobei die Halogenatome gleich oder verschieden sind, Hydroxy; Halogen; Cyano; Nitro; Amino; Monoalkyl- und Dialkylamino mit 1 bis 4 Kohlenstoffatomen je Alkylgruppe,
A für Wasserstoff oder C₁₋₄-Alkyl steht,
Z für C₁₋₄-Alkyl oder -NH(C₁₋₄-Alkyl) steht oder
A und Z gemeinsam mit den Atomen, an welche sie gebunden sind, einen gesättigten oder ungesättigten, 5- bis 7-gliedrigen heterocyclischen Ring bilden, der weitere 1 oder 2 gleiche oder verschiedene Heteroatome und/oder Heterogruppen enthalten kann, wobei als Heteroatome Sauerstoff oder Stickstoff und als Heterogruppen N-Alkyl in Frage kommen, wobei Alkyl der N-Alkyl-Gruppe 1 bis 4 Kohlenstoffatome enthält,
in Mischung mit dem
Azol-Derivat der Formel 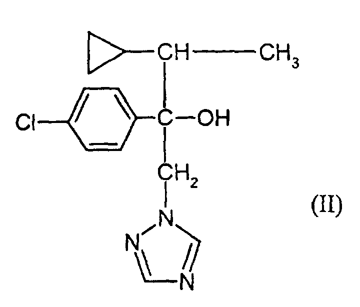 in einem synergistisch wirksamen Mengenverhältnis
enthalten.

2. Mittel gemäß Anspruch 1, worin auf 1 Gewichtsteil an Wirkstoff der Formel (I) 0,1 bis 10 Gewichtsteile an fungizidem Wirkstoff entfallen.

3. Mittel gemäß Anspruch 1, worin auf 1 Gewichtsteil an Wirkstoff der Formel (I) 0,3 bis 3 Gewichtsteile an fungizidem Wirkstoff entfallen.

4. Verfahren zur Bekämpfung von Pilzen und Insekten, **dadurch gekennzeichnet, daß** man Wirkstoffkombinationen gemäß Ansprüchen 1 bis 3 auf die Pilze, Insekten und/oder deren Lebensraum einwirken läßt.

5. Verwendung von Wirkstoffkombinationen gemäß Ansprüchen 1 bis 3 zur Bekämpfung von Pilzen und Insekten.

## Claims

1. Compositions for controlling pests of plants, which compositions comprise compounds of the general formula (I) 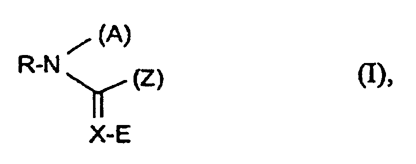 in which
X represents =CH- or =N-,
E represents NO₂ or CN,
R represents heteroarylmethyl having up to 6 ring atoms and N, O, S as heteroatoms, which are optionally substituted by alkyl having 1 to 4 carbon atoms, alkoxy having 1 to 4 carbon atoms, alkylthio having 1 to 4 carbon atoms, haloalkyl having 1 to 4 carbon atoms and 1 to 5 halogen atoms, where the halogen atoms are identical or different, hydroxyl; halogen; cyano; nitro; amino; monoalkyl- and dialkylamino having 1 to 4 carbon atoms per alkyl group,
A represents hydrogen or C₁₋₄-alkyl,
Z represents C₁₋₄-alkyl or -NH(C₁₋₄-alkyl) or
A and Z together with the atoms to which they are attached form a saturated or unsaturated 5- to 7-membered heterocyclic ring which may contain a further one or two identical or different heteroatoms and/or hetero groups, possible heteroatoms being oxygen or nitrogen and possible hetero groups being N-alkyl, where the alkyl of the N-alkyl group contains 1 to 4 carbon atoms,
in a mixture with the
azole derivative of the formula 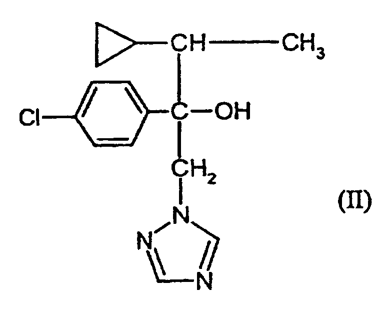 in a synergistically effective ratio.

2. Compositions according to Claim 1, wherein from 0.1 to 10 parts by weight of fungicidally active compound are present per part by weight of active compound of the formula (I).

3. Compositions according to Claim 1, wherein from 0.3 to 3 parts by weight of fungicidally active compound are present per part by weight of active compound of the formula (I).

4. Processes for the control of fungi and insects, **characterized in that** active compound combinations according to any of Claims 1 to 3 are allowed to act on the fungi, insects and/or their habitat.

5. Use of active compound combinations according to any of Claims 1 to 3 for controlling fungi and insects.

## Revendications

1. Compositions destinées à la lutte contre des parasites des plantes, qui contiennent des composés de formule générale (I) 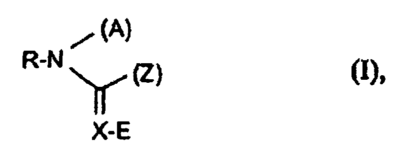 dans laquelle
X représente =CH- ou =N-,
E représente NO₂ ou CN,
R représente des restes hétéroarylméthyle, avec jusqu'à 6 atomes dans le noyau et N, O, S comme hétéroatomes, qui sont éventuellement substitués par un reste alkyle ayant 1 à 4 atomes de carbone, alkoxy ayant 1 à 4 atomes de carbone, alkylthio ayant 1 à 4 atomes de carbone, halogénalkyle ayant 1 à 4 atomes de carbone et 1 à 5 atomes d'halogène, les atomes d'halogène étant identiques ou différents, un groupe hydroxy ; un halogène ; un groupe cyano ; un groupe nitro ; un groupe amino; un reste monoalkylamino et dialkylamino ayant 1 à 4 atomes de carbone par groupe alkyle,
A représente l'hydrogène ou un reste alkyle en C₁ à C₄,
Z représente un reste alkyle en C₁ à C₄ ou -NH(alkyle en C₁ à C₄), ou bien
A et Z forment, conjointement avec les atomes auxquels ils sont liés, un noyau hétérocyclique pentagonal à heptagonal saturé ou non saturé qui peut contenir encore 1 ou 2 hétéroatomes et/ou hétérogroupes identiques ou différents, en considérant comme hétéroatomes l'oxygène ou l'azote, et comme hétérogroupes des groupes N-alkyle, le radical alkyle du groupe N-alkyle ayant 1 à 4 atomes de carbone,
en mélange avec
le dérivé azolique de formule 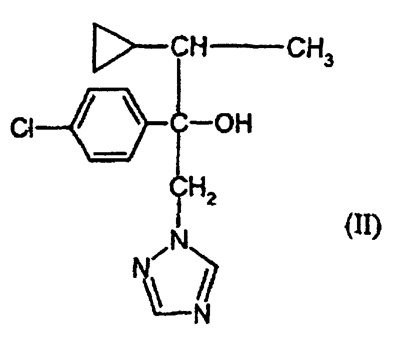 dans un rapport quantitatif à effet synergique.

2. Compositions suivant la revendication 1, contenant 0,1 à 10 parties en poids de substance active fongicide pour une partie en poids de substance active de formule (I).

3. Compositions suivant la revendication 1, contenant 0,3 à 3 parties en poids de substance active fongicide pour une partie en poids de substance active de formule (I).

4. Procédé de lutte contre des champignons et des insectes, **caractérisé en ce qu'**on fait agir des combinaisons de substances actives suivant les revendications 1 à 3 sur des champignons, des insectes et/ou leur milieu.

5. Utilisation de combinaisons de substances actives suivant les revendications 1 à 3 pour combattre des champignons et des insectes.
